Europäisches Patentamt

European Patent Office

Office européen des brevets

(11) Publication number: **0 227 999 B1**

# EUROPEAN PATENT SPECIFICATION

(45) Date of publication of patent specification: **09.06.93**  (51) Int. Cl.5: **G01S 17/46**, G01S 17/74

(21) Application number: **86117267.4**

(22) Date of filing: **11.12.86**

(54) **Target determining apparatus.**

(30) Priority: **16.12.85 US 809119**

(43) Date of publication of application:
**08.07.87 Bulletin 87/28**

(45) Publication of the grant of the patent:
**09.06.93 Bulletin 93/23**

(84) Designated Contracting States:
**DE GB IT SE**

(56) References cited:
DE-A- 2 947 955          FR-A- 2 186 658
FR-A- 2 495 797          GB-A- 2 143 395
LU-A- 67 809             US-A- 3 324 283
US-A- 3 434 785          US-A- 3 530 468
US-A- 4 029 415

PATENTS ABSTRACTS OF JAPAN, vol. 8, no.
215 (P-305)[1652], 2nd October 1984; & JP-
A-59 99 308 (KOMATSU SEISAKUSHO K.K.)
08-06-1984

Idem

(73) Proprietor: **NAMCO CONTROLS CORPORA-TION**
**7567 Tyler Boulevard**
**Mentor, Ohio 44060(US)**

(72) Inventor: **Laskowski, Edward L.**
**6154 Winchester Drive**
**Seven Hills Ohio 44131(US)**

(74) Representative: **Howden, Christopher Andrew et al**
**FORRESTER & BOEHMERT Franz-Joseph-Strasse 38**
**W-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

## Description

### BACKGROUND OF THE INVENTION

Position or target determining apparatus has previously been proposed, for example, in U.S. Patent No. US-A-4,225,226 which teaches the use of a scanning laser that interrogates retroreflectors positioned along one side of a field at fixed distances apart. A triangulation technique is used to determine both range and azimuth information. U.S. Patent No. US-A-4,029,415 teaches the use of a laser scanning a fixed width array of photodetectors, and a triangulation technique is utilized to determine range or distance information. U.S. Patent US-A-4,239,388 teaches use of a laser and an associated reflected laser light detector for identifying a laser light reflecting object by its pattern of reflectivity as a function of time.

The first mentioned patent US-A-4 225 226 has the objective of informing a crop dusting airplane pilot of his position over the field to be dusted so that evenly spaced passes may be obtained. It requires complicated electronics including a microprocessor to establish the position for subsequent passes over the field. The second mentioned patent US-A-4 029 415 has for its object the surveying of land but requires an operator to move the rod on which the fixed width array of photodetectors is mounted. The third mentioned patent US-A-4 239 388 has for its object the determination of objects on the ground by an aircraft or the like flying overhead and directing a laser beam downward to be reflected from the ground or the object.

FR-A-2495797 teaches the use of a scanning laser beam to interrogate a set of three retroreflectors. The angular position of each reflector is then used in a triangulation algorithm using transcendental equations to determine the location of the laser with respect to the reflectors, the reflectors implicitly being assumed to be point sources. FR-A-2186658 teaches a similar apparatus that also alternatively uses two lasers and two reflectors or one laser and two reflectors plus a gyro-compass for heading. All of the embodiments require the evaluation of transcendental equations. Patent Abstracts of Japan, Vol. 8, No. 215 (P-305)[1652] 2nd October 1984; and JP-A-59-99308 teaches a configuration for determining the distance to an object, within a specific given range, by measuring the time it takes a scanned laser beam to sweep a spot of light between two other fixed angle viewing directions. The calculation of the distance requires the evaluation of transcendental functions. GB-A-2143395 teaches the use of a scanning laser beam to interrogate two bar-coded retroreflectors. Position is determined by triangulation using transcendental functions. Reading the bar code from the reflected signal is proposed, but no means to do so is taught.

It is an object of the invention to provide an improved target determining apparatus wherein a retroreflective target is scanned by a light beam to determine the position of the target.

According to the invention this object is achieved by a target determining apparatus according to claim 1.

An embodiment of the invention is described below with reference to the accompanying drawings.

### BRIEF DESCRIPTION OF THE DRAWINGS

Fig. 1 is an isometric drawing of a target determining apparatus incorporating the invention;

FIG. 2 is a schematic diagram of an optical receiver circuit;

FIG. 3 is a schematic diagram of a pulse width to voltage conversion circuit;

FIG. 4 is a schematic diagram of a combined range and azimuth circuit;

FIG. 5 is a perspective view of a target determining apparatus in accordance with the invention to determine distance, azimuth and binary code identification;

FIG. 6 is a diagrammatic view of the binary code identification system;

FIG. 7 is a diagram of the returned pulses;

FIG. 8 shows a partial circuit for the binary code identification;

FIG. 9 is a diagrammatic showing of a shift register memory; and

FIG. 10 is an enlarged view of the shift register memory.

### DESCRIPTION OF THE PREFERRED EMBODIMENTS

The drawing illustrates a target determining apparatus 11 which embodies the present invention. This apparatus 11 includes a light source 12 which is preferably of columnated light such as a laser. This laser may be mounted inside a housing 13 for protection of the components. A rotatable motor 14 and a mirror 15 provides a means to scan a light beam from this light source 12 along a scanning path 16 at a known rate of angular velocity. In the present embodiment, this scanning path is in a horizontal plane because of a vertical motor axis and the 45 degree angle disposition of the mirror. This mirror is preferably a front surface mirror so that the scanning beam is narrow in the direction of the scanning path 17. In the preferred embodiment this scanning path extends radially from the rotatable mirror 15. A part or all of the housing 13 has a transparent window 18 so that the light beam may scan all or part of a 360 degree scanning path 17.

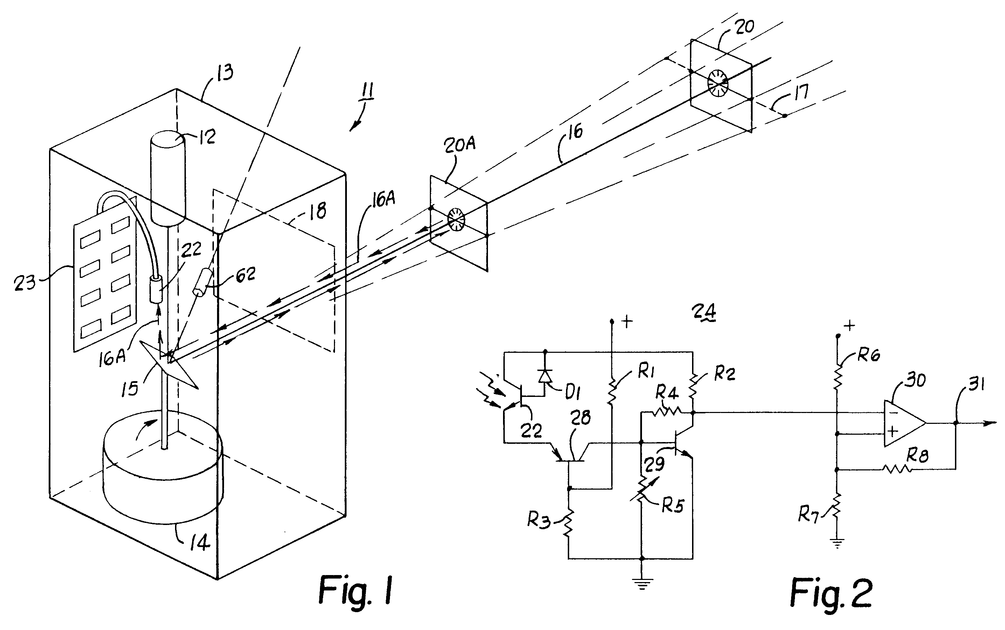

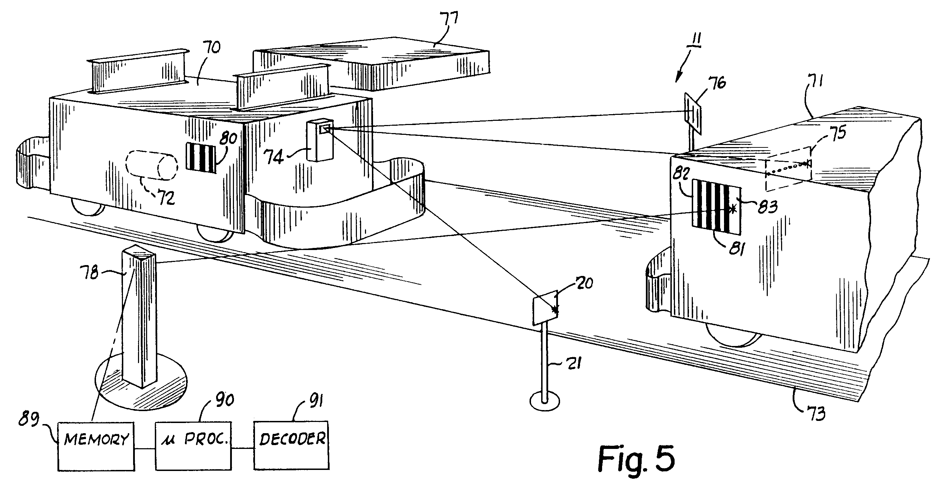

A retroreflector target 20 of a known size is adapted to be mounted on an object 21, as in FIG. 5, and is adapted to be mounted in the scanning path to reflect the beam of light from the light source 12 back toward the scanning mirror 15. A first photoreceptor 22 is positioned to be responsive to any reflected light beam 16 from the target reflector, and as FIG. 1 shows, this photoreceptor is positioned closely adjacent the light source 12. The target retroreflector is a device with the characteristic to return an incident light beam along its original axis, independent of axial incidence to the plane of the reflector. In practice the returned beam of light 16A is somewhat dispersed, and is not quite as columnated as the incident beam 16. The returned beam of light 16A instantaneously impinges the same rotating mirror 15, and reflects the returned beam back to the light source 12. However, since this returned beam is less columnated than the original, it can impinge a photoreceptor 22, which in practical terms is close, but not coincident with the output beam of light source 12. An electronic circuit 23 is connected to the receptor 22 to determine the position of the target or information about the target.

The motor 14 rotates the mirror 15 at a constant angular velocity. This may be anything practicable for the intended use and 20 revolutions per second is an example of the appropriate rate of scan.

A first use for this target determining apparatus 11 is to determine the distance to the target 20. FIG. 1 shows this target at a first distance from the scanning mirror and also shows the mirror at a second position 20A positioned closer to the scanning mirror. If one used a four inch wide retroreflector target 20 and it was positioned at ten feet distance then this might take five milliseconds to scan from the leading to the trailing edges of this target. However, if the same width target is positioned at 20A at one half of the distance or five feet distance from the mirror, then at the same rate of scan, it will take ten milliseconds to scan from the leading to the trailing edge of this target. The apparatus permits one to determine the distance to a target by the length of time for scanning across the target and it will be noted that the distance to the target is inversely related to the length of time of scan across the target. The electronic circuit 23 is capable of calculating this distance to the target.

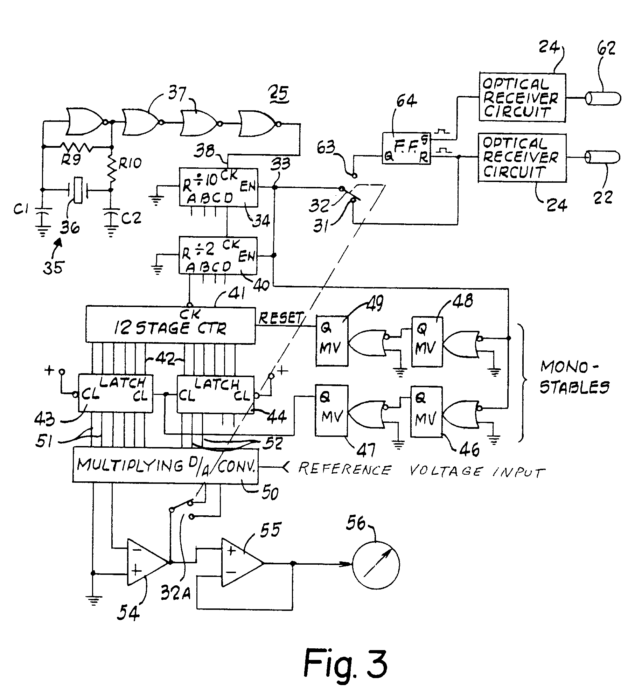

FIG. 2 illustrates an optical receiver circuit 24, and FIG. 3 illustrates a pulse width to voltage circuit 25 which together make up the circuit 23. In FIG. 2 the photoreceptor 22 is shown as a phototransistor, with the signal being amplified by transistors 28 and 29 and then fed to an operational amplifier 30 which is connected as a comparator to obtain a square pulse output at the terminal 31. This pulse is applied at the terminal 31 of a range switch 32 in the pulse width to voltage circuit 25 of FIG. 3. With this range switch in the position shown, the input pulse is applied to an enable terminal 33 of a divider 34. A high frequency oscillator 35, for example, four megahertz, is controlled by a crystal 36 and this signal is fed through a series of inverter gates 37 to square the oscillator signal and then is supplied to a clock input 38 of the divider 34. The enable input and clock input 38 form an AND circuit with output from the divider being produced only when the enable and clock inputs are a logic high. The output from the divider 34 is passed to a second divider 40 to obtain a lower frequency, 200 kilohertz as an example. This lower clock frequency is supplied to the clock input of a counter 41, for example, a twelve stage counter with the output being on a plurality of lines 42 and appearing as a binary number. These plural lines are connected to latches 43 and 44 which hold the last count from the counter 41.

The pulse signal at terminal 33 is also applied through monostable multivibrators 46 and 47 to obtain a short pulse, for example, 100 microseconds which is applied to the clock terminals of the latches 43 and 44 and hence clocks the information of the latches into a digital to analog conversion unit 50. At the same time the pulse on the photoreceptor 22 acts through monostable multivibrators 48 and 49 in series to reset the counter 41. The signal from the latch 43 is on plural lines 51 and is the most significant bit of a binary number whereas the signal from the latch 44 is on plural lines 52 and is the least significant bit presented to the d/a converter 50. The output of the d/a converter 50 is an analog voltage amplified by amplifier 54 and is then passed to a unity gain voltage follower 55 and then to a meter such as a volt meter 56.

In operation, the electronic circuit 23 operates to determine range or distance to the target by determining the length of time between the light beam reflection from the leading and trailing edges of the reflector 20. As an example of one possible application, let it be assumed that the oscillator is operating at four megahertz, the output from the divider 40 is 200 kilohertz and that the length of scan from the leading to trailing edges of this target reflector is five milliseconds at a ten foot distance of the target. When the light source is reflected from the target 20, the phototransistor 22 in FIG. 2 will be illuminated to turn on this transistor and this turns on transistors 28 and 29. This drives the inverting input to the op amp 30 low turning on this op amp so that the output terminal 31 is logic high. This logic high is tranferred to FIG. 3 and applied to the enable terminal 33 of a divider 34. The terminals 33 and 38 of this divider 34 form an AND circuit so that during the time that light is reflected from the target 20, the pulses from the oscillator 35 will be supplied as an input to the dividers 34 and 40. With the above-mentioned example, this would be one thousand pulses of the two hundred kilohertz clock frequency applied to the counter 41 during this five millisecond scan across the width of the target 20. These one thousand pulses will be transformed to a binary number and applied to the digital to analogue converter. The binary equivalent of the decimal number one thousand will then be applied at the output of the converter to the input of the amplifier 54. Assume that this is two volts, merely as an example. The amplifier 54 in conjunction with D/A converter 50 inverts this so that the output has a one-half volt output. The amplifier 55 operates as a unity gain voltage follower so that one-half volt is applied to the volt meter 56. This meter could be calibrated to show distance in feet, e.g. ten feet for a one-half volt input.

If now the target is moved to the position 20A at a distance of only five feet from the mirror 15, then the target will appear to be twice as wide and it will take ten milliseconds to scan across the width of this target. During this ten milliseconds of scan width there will be two thousand pulses applied to the counter 41 and hence the output of the converter 50 will be four volts instead of two volts. Since the amplifier 54 is connected to a multiplying D/A converter 50 in such a way that an increase in the value of the binary input signal to the D/A gives a decrease in the output of amplifier 54 according to the "1 divided by X" relationship, the output will be one-fourth of a volt applied to the meter 56 instead of one-half volt. Hence the meter reading, when calibrated in feet, would be only five feet instead of ten feet. Thus, the apparatus 11 determines the range or distance to the target and this distance is inversely related to the length of time of the scan of the width of the target. The circuits of FIGS. 2 and 3 each demonstrate one embodiment of a functional operation. Other, more or less elaborate circuits can be designed to perform the functions of providing a digital signal representing the status of returned light, as is done in FIG. 2, and pulse width conversion to an analog voltage, as is done in FIG. 3. Indeed, an integrated optoelectronic switch, the Sprague ULN-3330, can be substituted for the circuit in FIG. 2. In some applications the D/A converter 50, would not be used, and the digital count, contained in the 12 stage counter 41, can be brought out directly, to provide total digital representation of range to an intelligent control device, such as a microprocessor based control system. The function of the D/A converter 50, that is to perform the mathematical inverse operation to make the output signal proportional with distance, can in this case be computed internally within the microprocessor control, through a software implementation of the inverse calculation.

The target determining apparatus 11 may also be utilized to determine the azimuthal position of the target relative to a known azimuthal reference. FIG. 1 shows a second photoreceptor 62 at a known azimuth and located within the instrument housing, e.g. at the edge of the window 18, and this may be considered a reference zero degrees. The motor 14 may rotate in either direction and is shown as rotating clockwise with the target at about a 45 degree angle relative to this reference zero position. To determine the azimuth, the circuit of FIG. 3 may be utilized. The range switch 32 may be switched upwardly to an azimuth terminal 63 which is driven from the Q output of a flip-flop 64 to which the first and second photoreceptors 22 and 62 are each connected through an optical receiver circuit like that in FIG. 2, to the R and S inputs respectively. Simultaneously, a second set of switch contacts 32A switch the D/A converter from an inversion function (1 divided by X) to a linear function. The length of time that the laser beam sweeps from the reference position to the beginning of scan of the retroreflector is proportional to the azimuthal position of this target. When the light beam scans the second photoreceptor 62, a pulse is emitted and this causes the flip-flop 64 to switch to emit a logic high from the Q output. Accordingly clock pulses are counted by the counter 41 until the beam sweeps past the target retroreflector 20. This causes an input at the R input of the flip-flop 64 to switch it back to a logic zero output and stop the count. The counter now contains a binary count representing time. The digital to analog converter 50 converts this into an analog voltage representing azimuth. In this case, an inverted "1 divided by X" relationship is not desired since azimuth (angle) is directly related to the time period between the pulse from a circuit of FIG. 2 driven from photoreceptor 62 and the pulse from another copy of the circuit of FIG. 2 driven from photoreceptor 22. The amplifier 54 can be connected to the multiplying D/A 50 in a slightly different way to generate the linear rather inverse relationship. The reset and store signals from the monostable multivibrators 46-49 cause the counters and latches to operate in a repeating mode.

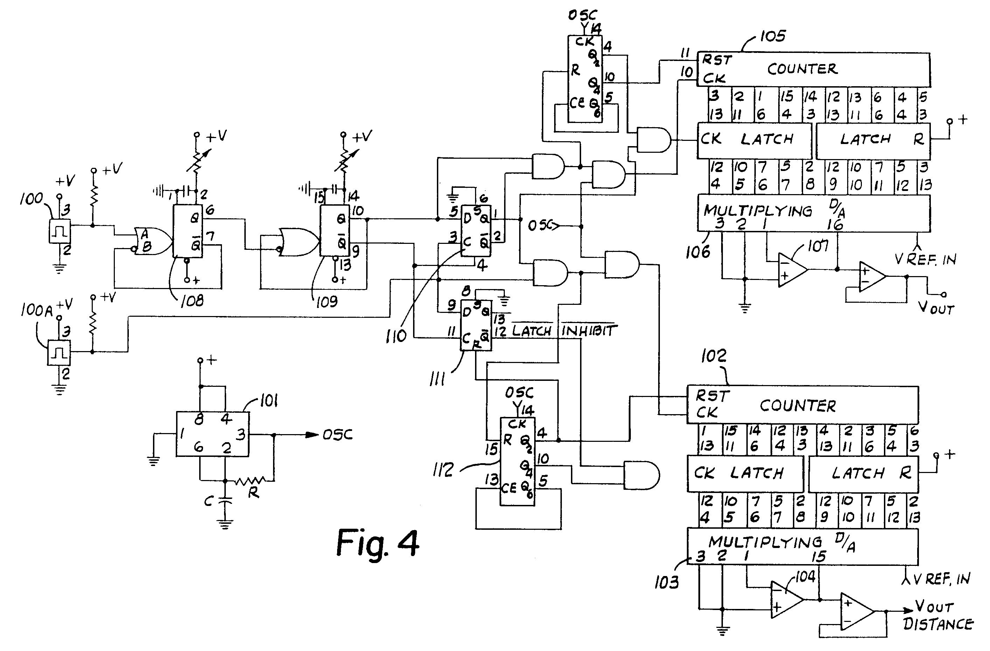

FIG. 4 shows the most recent design for combining the functions of range and azimuth into one simultaneous system. The optical receivers, previously described as FIG. 2, and photoreceptors 22 and 62, are replaced with optoelectric integrated circuits 100 and 100A. The crystal oscillator 36 is replaced with an integrated circuit device 101. The range circuitry, shown in FIG. 3 is again shown with counter 102 and D/A 103. The azimuth circuitry consists of counters 105 and D/A 106. Note that a simple connection choice to the D/A converter determinates whether the circuit performs a "1 divided by X" or an "X" function, such as the case for range the output of amplifier 104 is connected to pin 15 of D/A 103 to provide "1 divided by X" relationship, whereas the output of amplifier 107 is connected to pin 16 of D/A 106 to provide the "X" or non-inversion function. Dual use of one set of previously described monostable and flip-flop devices 46, 47, 48, 49, 64, now described as 108, 109, 110, 111 afford economy of design since they can drive both range and azimuth circuitry from one common set of pulses.

The apparatus 11 may be used not only to determine the azimuth and range of the target but also to identify which of several targets is being scanned. The FIG. 5 illustrates these three different capabilities of the apparatus 11. Automated guided vehicles 70 and 71 each have a motor 72 therein to provide locomotion of such vehicle. Such vehicles may move along a roadway 73 and be guided in operation by the apparatus 11. To this end, a scanner housing 74 may be mounted on the front of each vehicle to scan a fixed target 20 for azimuthal position and distance; may scan a retroreflector target 75 on the rear of each vehicle in order to maintain a safe distance between successive vehicles; and may scan a binary coded fixed target 76 along the roadway 73 in order to determine information about the location of the vehicle relative to its position along the roadway 73. For example, there may be work station 77 with the vehicles 70 and 71 transporting material to and from such work stations, and each work station could be identified by a different binary coded target 76. Also a scanner housing 78 may be mounted in a fixed location along the side of the roadway in order to scan binary coded targets 80 and 81 on the vehicles 70 and 71 respectively. This could be used to identify each of several vehicles passing within range. The binary code on the targets 76, 80 and 81 may be a pure binary code or may be a type of a bar code. In this embodiment, the binary coded targets are ones which have retroreflective stripes at both the leading and trailing edges 82 and 83 respectively.

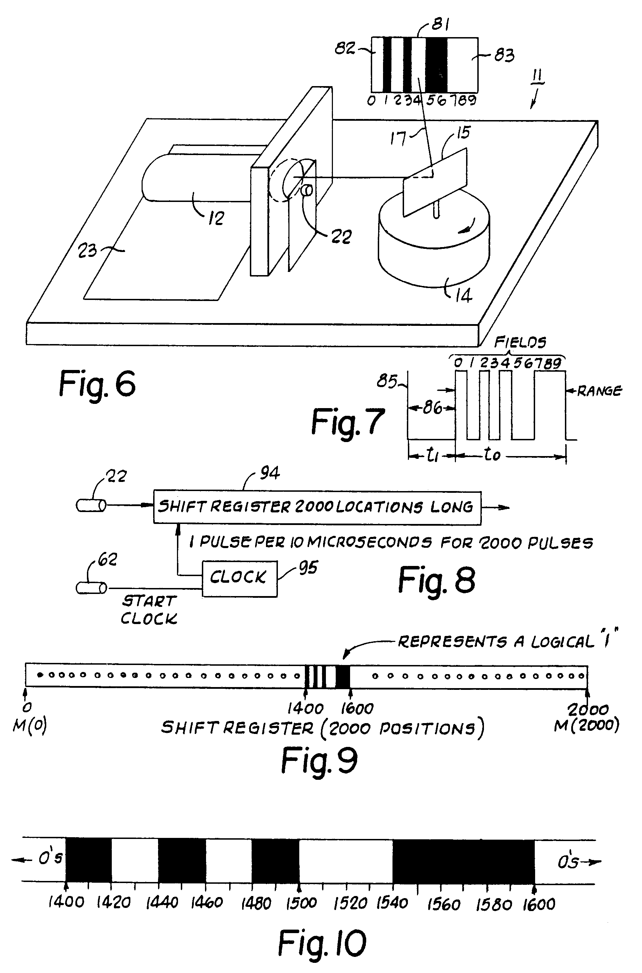

FIG. 6 illustrates diagrammatically the target determining apparatus 11 wherein the binary coded target such as targets 76, 80 or 81 is identified. In FIG. 6 parts the same as those in the FIG. 1 have been identified with the same reference numerals. The binary coded target 81 showin in FIG. 6 has a plurality of reflective and nonreflective strips tranverse to the scanning path 17 to establish binary indicia on the target. The electronic circuit 23 connected to the photoreflector 22 is adapted to read the binary indicia on this target 81. This target is shown as having a reflective strip at both the leading edge 82 and the trailing edge 83. FIG. 7 illustrates the binary indicia present on the returned pulse from scanning the width of the target. The dark strips which are nonreflective can be dark strips covering the retroreflector or merely some means to block retroreflector action such as complete absence of any retroreflector. FIG. 7 illustrates a return pulse 85 from the reference azimuth photo receptor 62, and hence the distance in time between the reference pulse 85 and the leading edge of the target still obtains the azimuthal position of the target. The entire width of the target may still be used to determine range or distance, and the binary code may be utilized to provide information about the target.

In FIG. 6 the total width of the retroreflector 81 has been divided into n equal width fields and in this example has been divided into ten such fields for an eight bit binary code number. The fields zero and nine in this embodiment are always reflective for a logic one condition. This allows the target reflector to be utilized for ranging as well. The eight bit binary code gives 256 unique identification codes. If two or more black fields occur in succession, they are continuous. Also reflective fields which occur in succession are continuous. It will be appreciated that as the target moves closer to or away from the scanning mirror, the time width of the coded pulses is likewise expanded or contracted. To decode the pattern, the pattern must be analyzed for relative values for each field within the combined ensemble. One way to do this is to digitally store the pattern in a memory device, either a shift register or a microprocessor memory. Next the total time width is determined similar to that as done to determine range, and then the pulse structure is analyzed to determine the value, whether a logic one or a zero, at or near the center of each field. This function may be performed by a microprocessor or by hardware. FIG. 5 shows that the pulse pattern is transferred from the scanner housing 78 into a memory 89 and then operated on by a microprocessor 90 and fed to a decoder 91. These decoders are commercially available such as a bar decoder.

The hardware version is perhaps easier to understand and FIGS. 8, 9 and 10 illustrate such an embodiment. In FIG. 8, assume that the total pulse width indicating range, from the bar coded reflector is one millisecond at ten feet and ten milliseconds at one foot distance. In scanning the ten fields within this total pulse, the precise width of the total pulse is not known because the range is still unknown. If one assumes for this example, a maximum range of ten feet, then each field is 0.1 milliseconds in scan width as a minimum.

Assume for discussion that the bar code is like that shown in FIGS. 6 and 7. The time period of the total reflector width, representing range, is $t_0$. The time period of the azimuth is $t_1$, and $f_n$ is the value of the field n, either a logic zero or one. Since $t_o$ and $t_1$ are variable, and independent of $f_n$, these may be determined by the following method. FIG. 8 shows a storage device in the form of a shift register 94 or this may be a microprocessor memory. The shift register 94 samples the wave form in time and stores that value as either a logic one or a zero. Since in this example a minimum time $t_o$ is one millisecond, and with an assumed maximum desired error of 1%, then the target is sampled and the value stored is X(t), with sampling at one millisecond divided by one hundred increments, or at each ten microseconds. Since X(t) can last up to ten milliseconds plus any delay due to azimuth, at one foot distance of the reflector could be positioned at zero degrees to some other angle, then some extra time must be accounted for. Let it be assumed that the total azimuth sweep is equivalent to two reflector widths at the one foot range and the total period which must be sampled is 2 X 10 milliseconds = 20 milliseconds; and this period is sampled for values of fields at each ten microsecond increments. Therefore, the memory device must contain 20 milliseconds divided by 10 microseconds per point = 2,000 sample slots in the memory. The two thousand stage shift register is commercially available in integrated circuit form.

As shown in FIG. 7, the procedure starts when the azimuth reference signal is received from the photoreceptor 62 and establishes the reference pulse 85. The shift register stores the first sampling at the ten microsecond point in memory position No. 1 and ten microseconds later, a clock pulse causes the memory location No. 1 to be placed into memory location No. 2 while putting the new present value of X(t) into memory location No. 1. This continues, and in fact all memory locations are shifted in this matter. So if $n^t$ represents the time at the nth increment of ten microseconds, then the shift register has 2,000 memory locations, each having a memory location $X(n^t)$. If memory location M(n) represents the nth location, for all locations: $M(n) = X(n^t)$, where t = the time fixed at ten microsecond intervals. The shift register therefore contains a sampled image of the returned pulse X(t) wave form, but in a digitized state. After 2,000 steps the clock 95 stops, and the stored data must be analyzed. The memory map of the shift register appears something like that shown in FIG. 9. The first thing determined is $t_o$. It is known that fields 0 and 9 are logic ones, and on FIG. 9 these are represented by the black lines. Starting from the left, the shift register contains all zeros until the reflector pattern is reached. Assume that the first logic one occurs at memory location 1400, i.e. M(1400) = 1. Starting from the right, the shift register contains all logic zeros until the end of the bar code is reached. Assume that this is reached at position 1600, i.e. M(1600) = 1. Therefore memory positions 1400 through 1600 contain the entire reflector pulse pattern. Since each position represents a time period of ten microseconds, the width $t_o$ can be calculated from $t_o$ = (1600 - 1400) x 10 microseconds = two milliseconds. Therefore, since the range determined by $t_o$, and 10 milliseconds gives one foot, one millisecond gives ten feet, the range in this example is approximately 5.5 feet.

Note also that the azimuth can be calculated from the fact that between time 0 and the first sample of the wave form, M(1400), this is 1400 X 10 microseconds = 14 milliseconds. Thus, if the angular velocity $\omega$ is known, then the azimuth is: $\theta = (\omega$ x 14 milliseconds) degrees.

The binary code identification may be determined from the memory map of FIG. 9. This is shown expanded in FIG. 10. It is known that the ten fields are equally divided into the entire segment of M(1400) - M(1600). Each bit field represents 1600 - 1400 divided by ten fields = 200 divided by 10 = 20 samples. Accordingly, field 0 is stored from M(1400) - M(1420). Successive fields are stored in each successive 20 samples. To find the identification number, the center or average of each field is examined and therefore the bit code or identification code is 01010011. The microprocessor 90 can readily sample each of these bit fields to identify this binary code or bar code. It will be appreciated that the memory map of FIG. 9 contains all the information for simultaneous determination of range, azimuth and target identification. Specific numbers used in this example are for illustration purposes only and the sampling rates, distances and scanning speed, etc. may be varied for particular requirements. The circuit components for one practical system combining FIGS. 2 and 3 circuit which has been constructed are set forth in the following table:

## Resistances

| | | |
|---|---:|---|
| R1 | 1.5 | K ohms |
| R2 | 22 | K ohms |
| R3 | 820 | ohms |
| R4 | 220 | ohms |
| R5 – R8 | 100 | K ohms |
| R9 | 6.8 | M ohms |
| R10 | 10 | K ohms |

## Capacitors

C1, C2   10 pf

## Transistors

| | |
|---|---|
| 22, 62 | OP805 |
| 28 | 2N4250 |
| 29 | 2N5088 |

## Amplifiers

| | |
|---|---|
| 30 | TL071 |
| 54, 55 | TL071 |

## Diodes

D1   IN914

## Gates

37   4001

## Integrated Circuits

| | |
|---|---|
| 34, 40 | 4518B |
| 41 | 4040B |
| 43, 44 | 40174 |
| 50 | AD7533KN |
| 46–49 | 4538 |
| 64 | 4027B |
| 90 | INTEL 8741 |
| 91 | Welch Allyn LTS-3 |
| 94 | AM2533 |

The most recent implementation of the system, shown in FIG. 4 has been constructed using components set forth in the following table.

| Integrated Circuits | |
|---|---|
| 100, 100A | ULN3330 |
| 102, 105 | 4040 |
| 103, 106 | AD7533KN |
| 104, 107 | TL071 |
| 108, 109 | 4538 |
| 110, 111 | 4013 |
| 112 | 4017 |

## Claims

1. A target determining apparatus having a light source (12), a scanning means (14, 15) for scanning a beam from said light source along a scanning path (16) at a known angular velocity, said light source beam being narrow in the direction of the scanning path (16), a retroreflective target (20, 81) of a known size mounted on an object adapted to be located in said scanning path to reflect said light beam back toward said scanning means, a photoreceptor (22) positioned to be responsive to any reflected light beam from said target reflector and pulse establishing means (34, 36, 37, 40) to establish pulses at a constant frequency during the scanning of the target, characterised in that:-

   distance determining means (23, 24, 25) is provided to determine the target distance, the target distance being related inversely to the length of time between the light beam scan from the target

7

EP 0 227 999 B1

leading edge across the target to the trailing edge, said distance determining means including:

means (41) to count the pulses to determine the scan time from the leading edge to the trailing edge of the target, and,

means (50, 54) responsive to the pulse count to produce a signal representing the reciprocal of the scan time.

**2.** A target determining apparatus as set forth in claim 1, including means (70, 71) to provide relative movement between the light source and said retroreflective target.

**3.** A target determining apparatus as set forth in claim 2, wherein said relative movement is provided by means to move said light source.

**4.** A target determining apparatus as set forth in claim 2, wherein said relative movement is provided by means to move said target.

**5.** A target determining apparatus as set forth in claim 1, wherein said pulse establishing means includes a fixed frequency oscillator (36).

**6.** A target determining apparatus as set forth in claims 1, 2, 3 or 4 wherein said means to measure scan times includes a crystal controlled oscillator (35); and an AND gate (34) having one input from said oscillator and another from the detection means to have an output of a series of pulses of the oscillator frequency with the number of such pulses being dependent upon the scan times.

**7.** A target determining apparatus as set forth in claim 6, including a counter (41) connected to count the number of pulses and a digital to analog converter (50) to convert the digital count to a proportional analog voltage which is inversely related to the distance from the scanning means to said target.

**8.** A target determining apparatus as set forth in claims 1, 2, 3 and 4 further including means (62) to establish a reference point at a known azimuthal position relative to said scanning means and means to determine the angular azimuthal position of the target relative to the reference point in accordance with the length of time of scan between the reference point and the target.

**9.** A target determining apparatus as set forth in claim 1, comprising

a plurality of reflective and non-reflective strips (82, 83) transverse to said scanning path (16) constituting said target (81) to establish binary indicia on said target (81); and reading means (89-91; 94, 95) connected to said photoreceptor (22) to read the binary indicia on said target (81) (Figs 5 to 8).

**10.** A target determining apparatus as set forth in claim 9, including a storage memory (89; 94) connected to said photoreceptor (22) to receive and store the binary information from the target (81).

**11.** A target determining apparatus as set forth in claim 10, wherein said storage memory (89) is a shift register (94).

**12.** A target determining apparatus as set forth in claim 10, wherein said reading means (94, 95) includes means (95) to sample the binary information in said storage memory (94) at a high repetition rate relative to the time width of the binary information in the storage memory (94) (Fig. 8).

**Patentansprüche**

**1.** Einrichtung zum Bestimmen eines Zieles, mit einer Lichtquelle (12), einer Abtastvorrichtung (14, 15) zum Abtasten eines Strahles von der Lichtquelle längs eines Abtastpfades (16) bei einer bekannten Winkelgeschwindigkeit, wobei der Strahl der Lichtquelle in der Richtung des Abtastpfades (16) schmal ist, einem rückstrahlenden Ziel (20, 81) bekannter Größe, das an einem in den Abtastpfad einbringbaren Gegenstand zum Reflektieren des Lichtstrahles zurück zur Abtastvorrichtung angebracht ist, einem Photorezeptor (22), der so angeordnet ist, daß er auf jeden vom Zielreflektor reflektierten Lichtstrahl anspricht, und einer Pulsvorrichtung (34, 36, 37, 40) zum Erzeugen von Impulsen mit einer konstanten Frequenz während des Abtastens des Zieles, **gekennzeichnet** durch eine Entfernungs-Bestimmungsvorrichtung (23, 24, 25) zum Bestimmen der Entfernung des Zieles, wobei die Entfernung des Zieles in

8

umgekehrtem Verhältnis zur zeitlichen Dauer der Lichtstrahlabtastung von der Vorderkante des Zieles über das Ziel zur Hinterkante des Zieles ist, und wobei die Entfernungs-Bestimmungsvorrichtung

- eine Vorrichtung (41) zum Zählen der Impulse, um die Abtastzeit von der Vorderkante zur Hinterkante des Zieles zu bestimmen, und
- eine Vorrichtung (50, 54) aufweist, welche auf die gezählten Impulse anspricht, um ein dem Umkehrwert der Abtastzeit entsprechendes Signal zu erzeugen.

2. Einrichtung zum Bestimmen eines Zieles nach Anspruch 1, mit einer Vorrichtung (70, 71) zum Vorsehen einer Relativbewegung zwischen der Lichtquelle und dem rückstrahlenden Ziel.

3. Einrichtung zum Bestimmen eines Zieles nach Anspruch 2, bei der die Relativbewegung durch eine Vorrichtung zum Bewegen der Lichtquelle realisiert ist.

4. Einrichtung zum Bestimmen eines Zieles nach Anspruch 2, bei der die Relativbewegung durch eine Vorrichtung zum Bewegen des Zieles realisiert ist.

5. Einrichtung zum Bestimmen eines Zieles nach Anspruch 1, bei der die Pulsvorrichtung einen Festfrequenz-Oszillator (36) aufweist.

6. Einrichtung zum Bestimmen eines Zieles nach Anspruch 1, 2, 3 oder 4, bei der die Vorrichtung zum Messen der Abtastzeit einen quarzgesteuerten Oszillator (35) und ein UND-Gatter (34) aufweist, wobei ein Eingang des UND-Gatters vom Oszillator und ein anderer von der Detektorvorrichtung gespeist ist, um eine Impulsfolge mit der Frequenz des Oszillators auszugeben, wobei die Anzahl dieser Impulse abhängig von den Abtastzeiten ist.

7. Einrichtung zum Bestimmen eines Zieles nach Anspruch 6, mit einem Zähler (41), der zum Zählen der Anzahl der Impulse angeschlossen ist, und einem Digital-Analogumsetzer (50) zum Umsetzen des digitalen Zählwertes in eine proportionale Analogspannung, die im umgekehrten Verhältnis zur Entfernung zwischen der Abtasteinrichtung und dem Ziel steht.

8. Einrichtung zum Bestimmen eines Zieles nach Anspruch 1, 2, 3 und 4, mit einer Vorrichtung (62) zum Einrichten eines Bezugspunktes bei einer bekannten Azimuthposition relativ zur Abtastvorrichtung und einer Vorrichtung zum Bestimmen der azimuthalen Winkelposition des Zieles relativ zum Bezugspunkt abhängig der zeitlichen Dauer der Abtastung zwischen dem Bezugspunkt und dem Ziel.

9. Einrichtung zum Bestimmen eines Zieles nach Anspruch 1, mit
mehreren reflektierenden und nicht-reflektierenden Streifen (82, 83), die quer zum Abtastpfad (16) verlaufen und das Ziel (81) bilden, um eine binäre Kennung des Zieles (81) zu schaffen, und einer Lesevorrichtung (89 bis 90; 94, 95), die mit dem Photorezeptor (22) verbunden ist, um die binäre Kennung des Zieles (81) zu lesen (Figuren 5 bis 8).

10. Einrichtung zum Bestimmen eines Zieles nach Anspruch 9, mit einer Speichervorrichtung (89, 94), die mit dem Photorezeptor (22) verbunden ist, um die binäre Information vom Ziel (81) zu empfangen und zu speichern.

11. Einrichtung zum Bestimmen eines Zieles nach Anspruch 10, bei der Speichervorrichtung (89) ein Schieberegister (94) ist.

12. Einrichtung zum Bestimmen eines Zieles nach Anspruch 10, bei der die Lesevorrichtung (94, 95) eine Vorrichtung zum Abtasten der binären Informationen in der Speichervorrichtung (94) mit einer hohen Wiederholungsrate relativ zur Zeitspanne der binären Informationen der Speichervorrichtung (94) aufweist (Figur 8).

## Revendications

1. Un appareil de détermination de cible pourvu d'une source lumineuse (12), d'un moyen de balayage (14, 15) pour balayer un faisceau provenant de ladite source lumineuse le long d'un trajet de balayage (16) à une vitesse angulaire connue, ladite source lumineuse étant étroite dans la direction du trajet de balayage (16), une cible réfléchissante (20, 81) d'une dimension connue montée sur un objet apte à être positionné dans ledit trajet de balayage afin de réfléchir en retour ledit faisceau lumineux vers ledit moyen de balayage, un photorécepteur (22) positionné pour être sensible à tout faisceau lumineux réfléchi provenant dudit réflecteur de cible, et un moyen d'établissement d'impulsions (34, 36, 37, 40) afin d'établir des impulsions à une fréquence constante pendant le balayage de la cible, caractérisé en ce que:

il est prévu un moyen de détermination de distance (23, 24, 25) pour déterminer la distance de la cible, la distance de la cible étant liée de façon inverse à la longueur du laps de temps entre le balayage du faisceau lumineux depuis le bord avant de cible en parcourant la cible jusqu'au bord arrière, ledit moyen de détermination de distance incluant :

un moyen (41) de comptage des impulsions afin de déterminer le temps de balayage entre le bord avant et le bord arrière de la cible, et

un moyen (50, 54) sensible au compte d'impulsions pour produire un signal représentant l'inverse du temps de balayage.

2. Un appareil de détermination de cible selon la revendication 1, incluant un moyen (70, 71) de réalisation d'un mouvement relatif entre la source lumineuse et ladite cible réfléchissante.

3. Un appareil de détermination de cible selon la revendication 2 dans lequel le déplacement relatif est réalisé par un moyen de déplacement de ladite source lumineuse.

4. Un appareil de détermination de cible selon la revendication 2 dans lequel ledit déplacement relatif est réalisé par un moyen de déplacement de ladite cible.

5. Un appareil de détermination de cible selon la revendication 1, dans lequel ledit moyen d'établissement d'impulsions inclut un oscillateur (36) à fréquence fixe.

6. Un appareil de détermination de cible selon d'une des revendications 1, 2, 3 ou 4 dans lequel ledit moyen de mesure des temps de balayage inclut un oscillateur (35) à commande par cristal et une porte ET (34) pourvue d'une entrée provenant dudit oscillateur et d'une autre entrée provenant du moyen de détection pour donner en sortie une série d'impulsions à la fréquence de l'oscillateur, le nombre de ces impulsions dépendant des temps de balayage.

7. Un appareil de détermination de cible selon la revendication 6, incluant un compteur (41) relié de manière à compter le nombre des impulsions et un convertisseur numérique-analogique (50) afin de convertir le compte numérique en une tension analogique proportionnelle qui est reliée, de façon inverse, à la distance entre le moyen de balayage et ladite cible.

8. Un appareil de détermination de cible selon l'une des revendications 1, 2, 3 et 4 incluant en outre un moyen (62) d'établissement d'un point de référence à une position azimutale connue par rapport audit moyen de balayage et un moyen de détermination de la position azimutale angulaire de la cible par rapport au point de référence en fonction de la longueur du laps de temps de balayage entre le point de référence et la cible.

9. Un appareil de détermination de cible selon la revendication 1 comprenant

une série de bandes réfléchissantes et non réfléchissantes (82, 83) transversales au trajet de balayage (16) constituant ladite cible (81) afin d'établir des marquages binaires sur ladite cible (81); et

un moyen de lecture (89-91; 94, 95) relié audit photorécepteur (22) pour lire les marquages binaires sur ladite cible (81 (Fig. 5 à 8).

10. Un appareil de détermination de cible selon la revendication 9, incluant une mémoire d'accumulation (89; 94) reliée audit photorécepteur (22) pour recevoir et accumuler, ou mémoriser, l'information binaire provenant de la cible (81).

11. Un appareil de détermination de cible selon la revendication 10, dans lequel ladite mémoire d'accumulation (89) est une registre à décalage (94).

**12.** Un appareil de détermination de cible selon la revendication 10, dans lequel ledit moyen de lecture (94, 95) inclut un moyen (95) d'échantillonnage de ladite information binaire dans ladite mémoire d'accumulation (94), à une fréquence de répétition élevée par rapport à la largeur temporelle de l'information binaire dans la mémoire d'accumulation (94) (Fig. 8).

Fig. 1

Fig. 2

EP 0 227 999 B1

Fig. 3

Fig. 4

EP 0 227 999 B1

Fig. 5

**Fig. 6**

**Fig. 7**

**Fig. 8**

**Fig. 9**

**Fig. 10**